Europäisches Patentamt

European Patent Office

Office européen des brevets

(11) Publication number: **0 165 071**
**B1**

## EUROPEAN PATENT SPECIFICATION

(45) Date of publication of patent specification: **27.12.89**

(51) Int. Cl.⁴: **G 01 G 19/32**

(21) Application number: **85304279.4**

(22) Date of filing: **14.06.85**

(54) **Rotary distribution tables.**

(30) Priority: **15.06.84 JP 88075/84 u**

(43) Date of publication of application:
**18.12.85 Bulletin 85/51**

(45) Publication of the grant of the patent:
**27.12.89 Bulletin 89/52**

(84) Designated Contracting States:
**DE FR GB IT**

(56) References cited:
**EP-A-0 070 647**
**EP-A-0 106 613**

(73) Proprietor: **ISHIDA SCALES MFG. CO. LTD.**
**44, Shogoin Sannou-cho Sakyo-ku**
**Kyoto-shi Kyoto (JP)**

(72) Inventor: **Nishi, Hitoshi**
**5-5, Imagata-cho 1-chome**
**Ohtsu-shi Shiga (JP)**
Inventor: **Izumi, Asashiro**
**7-18, Higashiyagura 4-chome**
**Kusatsu-shi Shiga (JP)**
Inventor: **Nishiyama, Sadanobu**
**58, Kitaochi Koura-cho**
**Inukami-gun Shiga (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

Courier Press, Leamington Spa, England.

## Description

The present invention relates to rotary distribution tables, for example a distribution table for use in a combinatorial weighing apparatus having a number of weighing machines disposed in a circular pattern, and supplied with articles such as pieces of cheese or jelly delivered downwardly onto the table for weighing these articles and combining the different weight values given by the respective machines so as to enable appropriate combinations, each having a preselected total weight, to be selected.

Particulate products such as snack foods or candies are commonly sold in packaged quantities of a standard specified weight. In weighing such quantities, it is generally not permissible for a resulting package to have an actual weight smaller than the standard specified weight. Therefore, a combinatorial weighing apparatus used for this purpose should generally give a weight which is slightly larger than the specified weight.

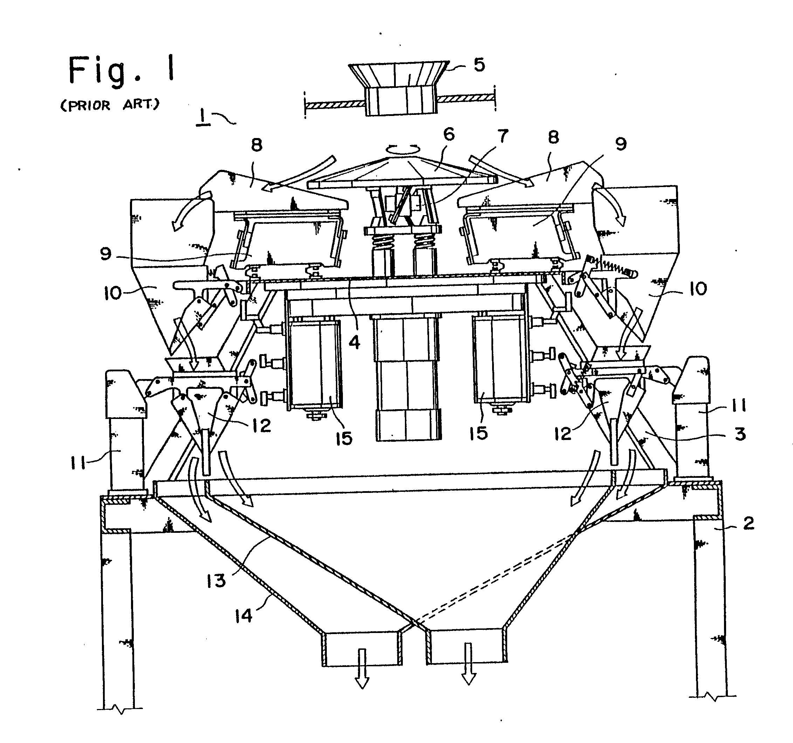

According to U.S. Patent No. 4,399,880, a combinatorial weighing apparatus has ten weighing hoppers, for example, arranged in a circular pattern and supplied randomly with articles to be weighed. The weights are combined and weight combinations are selected to find an optimum weight combination which is slightly greater than a preset weight according to the theory and practice of probability and statistics. Figure 1 of the accompanying drawings shows such a combinatorial weighing apparatus. The combinatorial weighing apparatus, generally designated at 1, has a frame 2 on which an upper frame 4 is mounted by a subframe 3. The upper frame 4 supports on its central portion a conical disk-shaped distribution table 6 disposed below an article charger 5 positioned above the frame 2, the distribution table 6 being mounted on a vibrator 7 which is reciprocally vibratable spirally, through a prescribed angle in a circumferential direction. A plurality (for example ten) of troughs 8 (only two shown in Figure 1) are disposed radially around the distribution table 6 and supported by suitable electromagnetic vibrators 9. The troughs 8 have their radially outward discharge ends positioned in pool hoppers 10, respectively, which have outlets opening toward weighing hoppers 12 supported on weight detectors 11 mounted on the frame 2 and including known load cells or the like. The weighing hoppers 12 have outlets opening toward lower collection chutes 13, 14.

Articles to be weighed which are carried on a conveyor or the like are charged from the charger 5 onto the distribution table 6. The distribution table 6 is reciprocally vibrated and turned through the given angle in the circumferential direction to distribute the articles as uniformly as possible into the troughs 8 through which the articles are supplied into the pool hoppers 10. The pool hoppers 10 are controlled by driver units 15 supported on the upper frame 4 for opening and closing their lids to feed the articles into the weighing hoppers 12, whereupon the supplied articles are weighed by the weight detectors 11. Those weighing hoppers 12 which give an optimum weight combination that is slightly larger than a preset weight are determined by a microcomputer (not shown). These selected weighing hoppers 12 are driven by the driver units 15 controlled by a control unit to open their lids for discharging the articles into either the collection chute 13 or 14 from which the articles are delivered to a packaging machine, not shown.

In the above process, reliable, satisfactory performance of the weighing and combinatorial operation depends upon the articles being supplied substantially uniformly from the distribution table 6 into the troughs 8.

As shown in Figure 1, the internal construction of the combinatorial weighing apparatus 1 is complex especially because of the need for compactness. Therefore, if articles overflow from the vibrating distribution table 6 into other parts of the apparatus, the apparatus 1 could malfunction and would need to be maintained and inspected at frequent intervals.

The distribution table 6 has a conical shape formed generally by pressing and hence has a simple slanted surface. The distributing table 6, when subjected to rotary vibration supplies the articles from its slanted conical surface substantially uniformly into the troughs 8 arranged around the distribution table 6. As shown in Figure 1, the troughs 8 are mounted on the electromagnetic vibrators 9 which are operated so that only those troughs 8 that are directed to the weighing hoppers selected to give an optimum weight combination in the last preceding weighing cycle, and thus discharged, are vibrated radially so as to supply those hoppers with fresh articles. The bottoms of the troughs 8 are disposed downwardly of the peripheral edge of the distributing table 6. Articles to be distributed into the troughs 8 are temporarily stored on the distribution table 6 before they are supplied into the troughs 8. When certain weighing hoppers 12 are selected, the corresponding troughs 8 are radially vibrated to advance the articles. If some of the weighing hoppers 12 are selected less frequently than others, then articles being deposited in the corresponding troughs 8 may overflow from the rear ends of the troughs 8 onto the upper frame 4. If some weighing hoppers 12 are selected too frequently, then the corresponding troughs 8 are liable to run short of articles.

Where articles having sticky surfaces are to be weighed, such as pieces of cheese or jelly, the distribution table may tend to distribute and supply the sticky articles irregularly as aggregated masses. Since the central portion of the distributing table as it is vibrated spirally is moved more vertically than circumferentially, articles are apt to remain deposited on the central portion of the table rather than being distributed radially outwardly. When such deposited articles are in excess of a certain limit, they tend to coalesce and be supplied only irregularly into the troughs.

It is accordingly desirable to provide a distribution table construction, for example for use in a combinatorial weighing apparatus, which can promote a more reliably uniform distribution of such articles to be weighed.

According to the present invention there is provided a rotary distribution table comprising a substantially conical upper table portion mounted, with its apex upppermost, coaxially above a frusto-conical lower table portion which extends radially outwardly beyond a lower peripheral edge of the said upper table portion and is slanted downwardly, in the radially outward direction, at a smaller angle than is the said upper table portion, there being a vibrator supporting the upper and lower table portions and operable to impose rotary vibration thereon about their common axis.

Our preferred embodiment of the present invention includes adjustable interconnecting means arranged between the said upper and lower table portions and adjustable to raise or lower said upper table portion with respect to the said lower table portion. This enables the height of the upper portion to be adjusted to achieve optimum distribution and supply of articles of different properties.

Reference will now be made, by way of example, to the accompanying drawings, in which:

Figure 1 shows a partly sectional side elevational view of a conventional combinatorial weighing apparatus;

Figure 2 shows an axially sectioned view of a distribution table according to a first embodiment of the present invention;

Figure 3 shows an axially sectioned view of a portion of a distribution table according to a second embodiment of the present invention;

Figure 4 shows an axially sectioned view of a portion of a distribution table according to a third embodiment of the present invention;

Figure 5 shows an axially sectioned view of a portion of a distribution table according to a fourth embodiment of the present invention;

Figure 6 shows an axially sectioned view of a portion of a distribution table according to a fifth embodiment of the present invention;

Figure 7 shows an exploded perspective view of a portion of a distribution table according to a sixth embodiment of the present invention; and

Figures 8 and 9 show axially sectioned views of respective components of the distribution table of Figure 7.

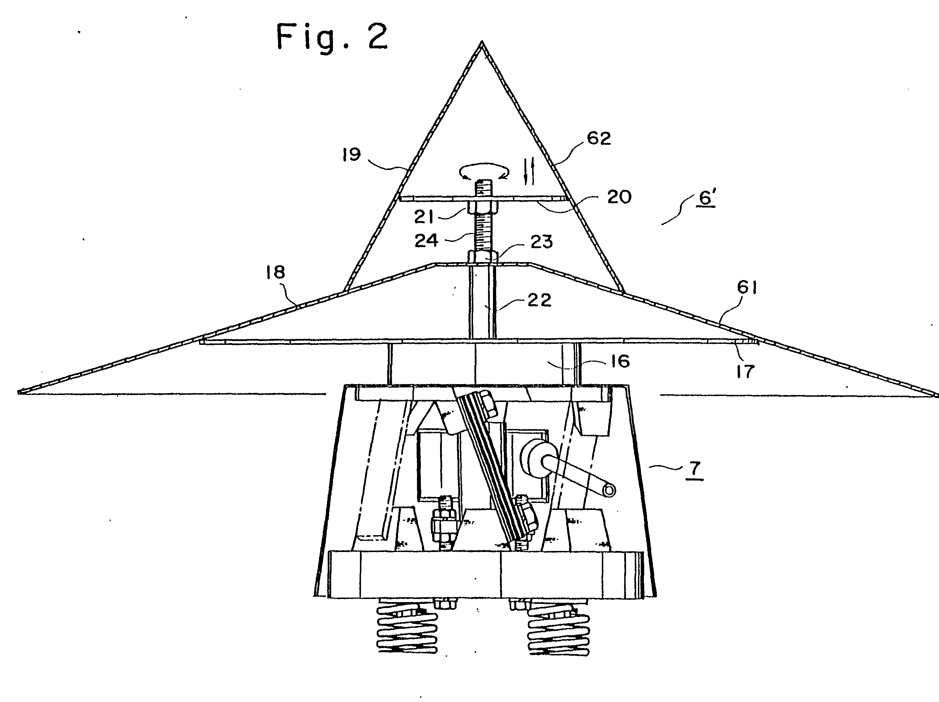

The distribution table of Figure 2, generally indicated by the reference character 6′, is disposed on an upper end of a combinatorial weighing apparatus for weighing articles such as pieces of cheese or jelly. The distribution table 6′ includes a substantially conical main table 61 providing a frusto-conical lower table portion 18 which is slanted downwardly, in the radially outward direction, at a small angle. The main table 61 is supported on a circular plate 17 mounted by a bracket 16 on a rotary vibrator 7 which is identical to the electromagnetic vibrator 7 shown in Figure 1 for producing spiral vibratory motion. The distributing table 6′ is surrounded by a number of radial troughs 8 (fourteen troughs, for example) arranged in a circular pattern.

A conical subtable 62 is mounted above the upper portion of the main table 61 in coaxial relation thereto, the apex of the subtable being uppermost. The conical subtable 62 has a maximum diameter, at its lower peripheral edge, that is smaller than the diameter of the bottom of the main table 61. The subtable 62 provides an upper portion 19 having its side slanted downwardly at an angle much greater than the angle of inclination of the lower table portion 18. A circular plate 20 is disposed in the table portion 19 and welded thereto, with a weld nut 21 being welded centrally to the circular plate 20.

The main table 61 includes an upper horizontal portion having a central hole defined therein. A bracket 22 is mounted vertically on the center of the circular plate 17 disposed in the main table 61. A bolt 24 is attached to an end of the bracket 22 and extends through the central hole in the upper horizontal portion of the main table 61, which is fastened against the bracket 22 by a nut 23 to fix the main table 61 to the vibrator 7. The bolt 24 is threaded through the weld nut 21 and the circular plate 20 to position the conical subtable 62 coaxially with the main table 61.

When assembling the conical subtable 62 with the main table 61, the weld nut 21 on the plate 20 is threaded over the bolt 24 from its upper end and the conical subtable portion 62 is turned until the lower edge of the table portion 19 thereof engages the main table 61, at the upper limit of the lower table portion 18.

A lock nut may be disposed on the bolt 24, below the weld nut 21, if the height of the conical subtable 62 with respect to the main table 61 is to be increased so as to adjust the amount of articles to be deposited on the table portion 18 at the lower end of the conical subtable 62.

With the main table 61 and the conical subtable 62 thus assembled on the vibrator 7, to form the distributing table 6′, the combinatorial weighing apparatus is operated for a combinatorial weighing operation. The vibrator 7 is actuated to spirally vibrate the distributing table 6′ to enable articles such as pieces of cheese or jelly supplied from above to be distributed and supplied into the troughs arranged around the distributing table 6′.

In the article distributing and supplying process, the articles are supplied onto the upper conical subtable 62 directly from above and flow quickly over the conical subtable 62, onto the table portion 18 of the lower larger-diameter main table 61, since the side of the upper table portion 19 is slanted steeply.

Inasmuch as the table portion 18 of the main table 61 is slanted less steeply than the table portion 19 of the upper conical subtable 62, the supplied articles do not flow quickly over the portion 18 but tend to be deposited on an inner region of the table portion 18, from which the articles are gradually supplied uniformly into the troughs 8 under distribution and supply action due to the spiral turning movement of the vibrator 7.

Such a flow pattern over the distributing table 6' tends to prevent the articles from accumulating irregularly or being unduly reduced in number at the lower peripheral edge of the main table 61.

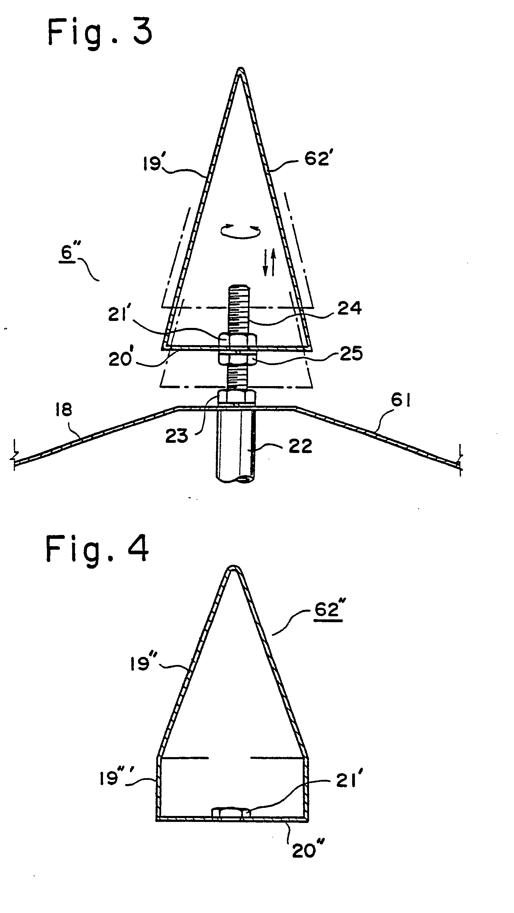

Figure 3 shows an embodiment in which a conical subtable 62' provides an upper table portion 19' with its side slanted more steeply than the table portion 19 of Figure 2. A weld nut 21' is fixed to the upper surface of a plate 20' integral with the lower end of the table portion 19' and a lock nut 25 is held against the lower surface of the plate 20', the weld nut 21' and the lock nut 25 being threaded over the bolt 24. By turning the nuts 21' and 25 to adjust the height of the conical subtable 62' with respect to the main table 61, the quantity of articles deposited on the central portion of the main table 61 can be adjusted to influence the rate of supply of articles from the main table 61 to the radial troughs 8. With the embodiment of Figure 3, the distributing table construction can be effective in supplying sticky articles which would otherwise find relative difficulty in getting supplied from the distributing table into the troughs.

Figure 4 shows a subtable 62'' according to a third embodiment. The subtable 62'' has a substantially conical portion 19'', with its upper apex rounded, a cylindrical skirt portion 19''' extending from the lower end of the table portion 19'', and a plate 20'' integral with the skirt portion 19'''. A weld nut 21' is integrally formed on the upper surface of the plate 20''. The subtable 62'' is suitable for use with articles in the form of chips as it prevents such articles from being stocked out of balance at the central portion of the main table beneath the subtable.

Many general combinatorial weighing machines, including the combinatorial weighing machine shown in Figure 1, incorporate optical sensor means for detecting the manner in which articles are deposited on their distributing tables. The following embodiments are designed for use in combinatorial weighing apparatus having such an optical sensor means.

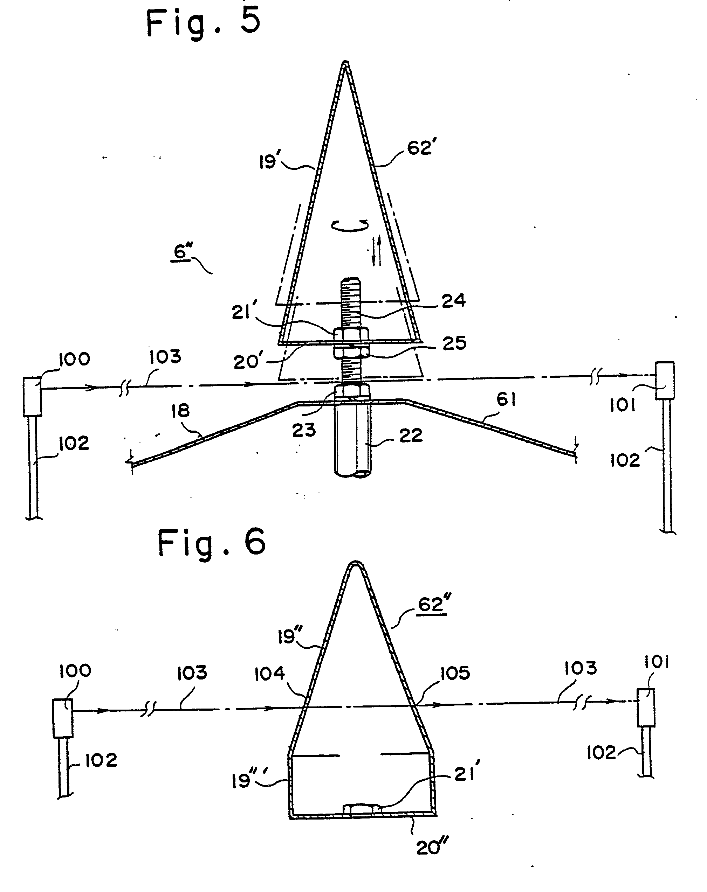

In Figure 5, a light-emitting device 100 for emitting a narrow beam such as of infrared or visible light is composed of a light-emitting element, such as a semiconductor, and a lens system for converging the light emitted from the light-emitting element into a beam. A light-detector device 101 for detecting the light beam from the light-emitting device 100 comprises a light-detector element, such as a semiconductor, and a lens system for focusing the light beam from the light-emitting device 100 onto the light-detector element. The light-emitting device 100 and the light-detector device 101 are mounted on upstanding studs 102, respectively, supported on the frame 2 (Fig. 1) of the combinatorial weighing apparatus. The axis 103 of the light beam emitted from the light-emitting device 100 is displaced from a diametrical line of the main table 61. With this arrangement, the light beam generated by the light-emitting device 100 reaches the light-detector device 101 without being interrupted by the bolt 24.

While the combinatorial weighing apparatus is in operation, if no articles are deposited below the lower end of the conical subtable 62', the light beam emitted from the light-emitting device 100 is not interrupted and is detected by the light-detector device 101, which issues a signal to a control system composed of a computer (not shown) which then generates a command for charging additional articles. In response to this command, articles are charged from the article charger 5 onto the conical subtable 62' from which they fall on the lower table portion 18. The articles are then supplied into the pool hoppers 10. As the articles are deposited on the table portion 18 below the subtable 62', the light beam from the light-emitting device 100 is interrupted, and the light-detector device 101 detects such a beam interruption and accordingly stops the supply of articles from the charger 5.

Figure 6 shows a fifth embodiment which incorporates the subtable 62'' of Figure 4. As illustrated, the table portion 19'' of the subtable 62'' has two light-transmitting windows 104 and 105 defined therein, and the light-emitting device 100 and the light-detector device 101 are arranged to pass the light beam along the axis 103 through the light-transmitting windows 104, 105. The light-transmitting windows 104, 105 may be defined in the skirt portion 19'''. The light-transmitting windows 104, 105 are covered with panels of a material such as glass or synthetic resin capable of transmitting the light beam therethrough and are dimensioned so as not to interrupt the light beam when the table 62'' is moved vertically over a normal range of adjustment. Operation of the arrangement of Figure 6 is the same as that of the arrangement of Figure 5, and will not be described.

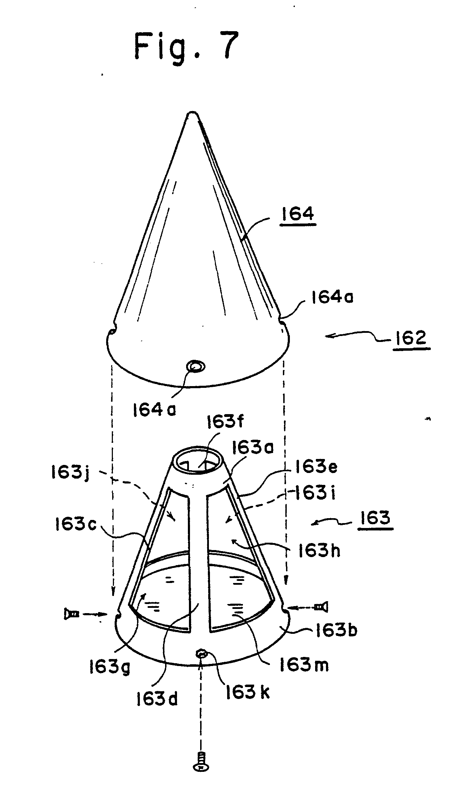

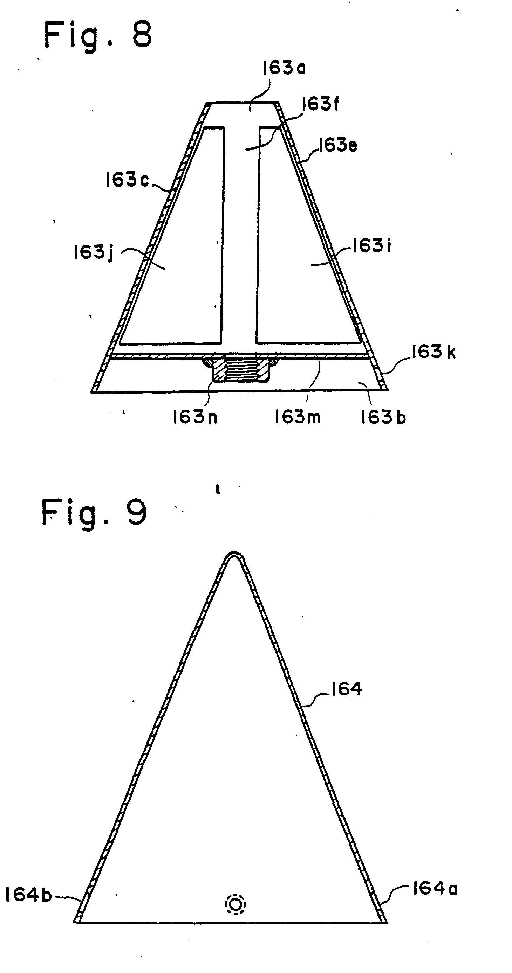

Figures 7 through 9 are illustrative of a sixth embodiment of the present invention. Figure 7 shows a conical frame 163 made of a stainless steel sheet and having upper and lower ends 163a, 163b interconnected by four legs 163c through 163f. The upper and lower ends 163a, 163b and the four legs 163c-f jointly define four windows 163g through 163j therebetween. The lower end 163b has four screw holes 163k. As illustrated in Figure 8, a plate 163m is fixed as by welding to the inner surface of the lower end 163b and supports a weld nut 163n welded centrally thereto.

The frame 163 is covered with a conical cap 164 made of synthetic resin such as polycarbonate resin capable of passing a light beam therethrough or reinforced glass known as the trademark "Pyrex" capable of passing a light beam therethrough. As shown in Figure 9, the cap 164 has in its lower end screw holes 164a to be registered with the screw holes 163k in the lower end 163b of the frame 163.

In assembly, the cap 164 is fitted over the frame 163 as indicated by the dotted lines in Figure 7, and flush screws are threaded through the screw holes 163k, 164a to interconnect the cap 164 and the frame 163, thus producing a conical subtable 162. Although not shown, the conical subtable 162 is threaded over the bolt 24 (Figure 5) projecting from the upper end of the main table 61 and is secured to the main table 61. As thus assembled, a light beam emitted from the light-emitting device 100 passes through the cap 164 and a diametrical pair of the four windows 163g through 163j defined in the frame 163, and then reaches the light-detector device 101.

In the embodiment shown in Figure 2, light-emitting and light-detector devices may be mounted on studs on the frame 2, and the conical subtable 62 may be arranged so as not to interrupt the axis of the light beam emitted from the light-emitting device and detected by the light-detector device, so that the manner in which articles are deposited on the main table 61 can be detected by the light beam.

Although certain preferred embodiments have been shown and described, it should be understood that many changes and modifications may be made therein without departing from the scope of the appended claims. For example, a fin or blade may be attached to the lower portion of the conical subtable so that the same can be pulled away from the conical main table by gripping the fin or blade.

## Claims

1. A rotary distribution table comprising a substantially conical upper table portion (19) mounted, with its apex upppermost, coaxially above a frusto-conical lower table portion (18) which extends radially outwardly beyond a lower peripheral edge of the said upper table portion and is slanted downwardly, in the radially outward direction, at a smaller angle than is the said upper table portion, there being a vibrator (7) supporting the upper and lower table portions and operable to impose rotary vibration thereon about their common axis.

2. A rotary distribution table as claimed in claim 1 including selectively adjustable interconnecting means arranged between the said upper and lower table portions and adjustable to raise or lower said upper table portion with respect to the said lower table portion.

3. A rotary distribution table as claimed in claim 1 or 2, wherein said upper and lower table portions have a clearance therebetween to allow the passage of a light beam therebetween.

4. A rotary distribution table as claimed in claim 1 or 2, wherein the said upper table portion has light transmitting regions to allow the passage of a light beam through the said upper table portion.

5. A rotary distribution table as claimed in claim 4, wherein the said regions are covered with optically transparent material.

6. A rotary distribution table as claimed in claim 1 or 2, wherein said upper table portion (164) is made of optically transparent material and is supported by a metal frame-like structure.

7. A combinatorial weighing apparatus including a plurality of weighing machines, a supply mechanism for supplying articles to be weighed into the said weighing machines and means for combining respective weight values given by the weighing machines to select an acceptable combination thereof, wherein the said supply mechanism includes a rotary distribution table as claimed in any preceding claim.

## Patentansprüche

1. Drehverteilungstisch mit einem im wesentlichen konischen oberen Tischteil (19), der mit der Spitze nach oben koaxial über einem kegelstumpfförmigen unteren Tischteil (18) angebracht ist, der sich radial nach außen über den unteren Umfangsrand des oberen Tischteiles hinaus erstreckt und radial nach außen in einem kleineren Winkel abwärts geneigt ist als der obere Tischteil, wobei ein Vibrator (7) vorgesehen ist, der den oberen und den unteren Tischteil stützt und derart betreibbar ist, daß er sie um ihre gemeinsame Achse mit Drehvibrationen beaufschlagt.

2. Drehverteilungstisch nach Anspruch 1, mit wahlweise einstellbaren Verbindungsmitteln, die zwischen dem unteren und dem oberen Tischteil angeordnet und derart einstellbar sind, daß sie den oberen Tischteil in Bezug zum unteren Tischteil heben oder senken.

3. Drehverteilungstisch nach Anspruch 1 oder 2, bei dem der obere und der untere Tischteil zwischen sich ein Spiel aufweisen, um den Durchgang eines Lichtstrahls zu ermöglichen.

4. Drehverteilungstisch nach Anspruch 1 oder 2, bei dem der obere Tischteil lichtdurchlässige Bereiche aufweist, um den Durchgang eines Lichtstrahls durch den oberen Tischteil zu ermöglichen.

5. Drehverteilungstisch nach Anspruch 4, bei dem die genannten Bereiche mit optisch transparentem Material bedeckt sind.

6. Drehverteilungstisch nach Anspruch 1 oder 2, bei dem der obere Tischteil (164) aus optisch transparentem Material besteht und durch eine metallische rahmenartige Struktur gestützt ist.

7. Kombinatorische Wägevorrichtung mit mehreren Wägemaschinen, einem Zuführmechanismus zum Zuführen von zu wägenden Artikeln in die Wägemaschinen und Mitteln zum Kombinieren jeweiliger von den Wägemaschinen gelieferter Gewichtswerte, um eine akzeptable Kombination von Wägemaschinen zu wählen, bei welcher der Zuführmechanismus einen Drehverteilungstisch nach einem der vorhergehenden Ansprüche aufweist.

## Revendications

1. Plateau de distribution rotatif comprenant une partie supérieure (19) de plateau sensiblement conique montée coaxialement à une partie inférieure (18) de plateau tronconique et au-dessus de celle-ci, son sommet étant situé au point le plus haut, ladite partie inférieure s'étendant radialement vers l'extérieur au-delà d'un bord périphérique inférieur de ladite partie supérieure de plateau et étant inclinée vers le bas dans le sens radial vers l'extérieur, avec un angle plus faible que celui de ladite partie supérieure de plateau, un appareil vibrant (7) portant les parties supérieure et inférieure de plateau et étant susceptible d'être actionné en vue de faire subir à celles-ci des vibrations rotatives autour de leur axe commun.

2. Plateau de distribution rotatif selon la revendication 1, comprenant des moyens de liaison susceptibles d'être réglés sélectivement, disposés entre lesdites parties supérieure et inférieure de plateau et susceptibles d'être réglés en vue de relever ou d'abaisser ladite partie supérieure de plateau par rapport à ladite partie inférieure de plateau.

3. Plateau de distribution rotatif selon la revendication 1 ou 2, dans lequel lesdites parties supérieure et inférieure de plateau ont un certain jeu entre elles afin de permettre le passage d'un rayon lumineux entre elles.

4. Plateau de distribution rotatif selon la revendication 1 ou 2, dans lequel ladite partie supérieure de plateau comporte des zones de transmission de la lumière en vue de permettre le passage d'un rayon lumineux à travers ladite partie supérieure de plateau.

5. Plateau de distribution rotatif selon la revendication 4, dans lequel lesdites zones sont recouvertes par un matériau optiquement transparent.

6. Plateau de distribution rotatif selon la revendication 1 ou 2, dans lequel ladite partie supérieure (164) de plateau est réalisée en un matériau optiquement transparent et est supportée par une structure métallique en forme de bâti.

7. Appareil de pesage combinatoire comprenant une pluralité de machines de pesage, un mécanisme d'alimentation pour délivrer des articles à peser dans lesdites machines de pesage et des moyens pour combiner des valeurs de poids respectives données par les machines de pesage dans le but de choisir une combinaison acceptable de celles-ci, dans lequel ledit mécanisme d'alimentation comprend un plateau de distribution rotatif selon l'une quelconque des revendications précédentes.

Fig. I
(PRIOR ART)

Fig. 2

EP 0 165 071 B1

# Fig. 3

19′    62′

6″

21′    24

20′    25

18    23    22    61

# Fig. 4

62″

19″

19‴    21′

20″

3

# Fig. 5

# Fig. 6

4

# Fig. 7

## Fig. 8

163a
163f
163e
163c
163j
163i
163k
163n   163m   163b

## Fig. 9

164
164b
164a